# EUROPÄISCHE PATENTSCHRIFT

(11) **EP 0 620 146 B1**
(45) Veröffentlichungstag und Bekanntmachung des Hinweises auf die Patenterteilung: **02.01.1997**
(21) Anmeldenummer: 94105431.4
(22) Anmeldetag: 08.04.1994
(51) Int. Cl.: B62B 3/10

(54) **Einkaufswagen**
Shopping cart
Chariot d'achat

(30) Priorität: 16.04.1993 DE 4312392
(43) Veröffentlichungstag der Anmeldung: 19.10.1994
(73) Patentinhaber: Brüder Siegel GmbH + Co. KG Draht- und Metallwarenfabrik, D-89340 Leipheim (DE)
(72) Erfinder: Siegel, Franz, D-89340 Leipheim (DE)
(74) Vertreter: Grättinger & Partner

(56) Entgegenhaltungen:
- DE-U- 8 500 639
- US-A- 2 890 058

## Beschreibung

Die vorliegende Erfindung betrifft einen Einkaufswagen mit einem Fahrgestell, einem hieran befestigten Warenbehälter und einer Ablage, insbesondere für Getränkekisten, wobei die Ablage eine Gebrauchslage und eine Nichtgebrauchslage einnehmen kann und ein starres Stützteil sowie ein Schwenkteil umfaßt, welches um eine horizontale, querverlaufende Achse schwenkbar an dem Stützteil angelenkt ist und einen Abstellflächenabschnitt und einen entfernt von der Schenkachse vorgesehenen Anschlag aufweist.

Ein derartiger Einkaufswagen ist aus der US-A-2890058 bekannt. Dabei ist das Schwenkteil an einem unterhalb des Warenbehälters angeordneten Abstellrost in der Weise verschwenkbar befestigt, daß es bei Nichtgebrauch in eine aufrechte Stellung geschwenkt werden kann, in der es das Schieben des Einkaufswagen nicht behindert. Die bekannte Ablage ist insbesondere im Hinblick auf ihre Statik nachteilig. Denn wird das Schwenkteil mit schweren Gegenständen beladen, kann es infolge der hohen resultierenden Kräfte und Momente zu einer Beschädigung der Aufhängung der Ablage kommen.

Ein zwei schwenkbare Ablagen aufweisender Einkaufswagen ist aus der DE-27 42 958 A1 (Fig. 4) bekannt. Bei einer im hinteren Bereich des Einkaufswagens vorgesehenen Ablage ist dabei das Schwenkteil an der Rückwand des Warenbehälters angelenkt, und zwar im Bereich von deren Unterkante. Es kann, wenn die Ablage nicht benötigt wird oder wenn mehrere Einkaufswagen gestapelt werden sollen, nach oben in die Ebene der Rückwand des Warenbehälters geschwenkt werden (Nichtgebrauchslage); in der Gebrauchslage ist das Schwenkteil so weit nach unten geklappt, daß die Abstellfläche geringfügig schräg nach hinten geneigt ist. Eine weitere, im vorderen Bereich des Einkaufswagens vorgesehene Ablage umfaßt ein Schwenkteil, welches vorne-unten am Warenbehälter schwenkbar angelenkt ist. In der Gebrauchslage der Ablage erstreckt sich das Schwenkteil vor der Vorderwand des Warenbehälters nach vorne, wobei die Abstellfläche im wesentlichen horizontal verläuft; in der Nichtgebrauchslage ist das Schwenkteil der vorderen Ablage nach oben verschwenkt, so daß es im wesentlichen an der Vorderwand des Warenbehälters anliegt.

Auch dieser Einkaufswagen weist die im Zusammenhang mit der US-A-2890058 angegebenen Nachteile auf. Zudem gestattet die bekannte Art der Aufhängung des Schwenkteils nicht, daß die Ablage im hinteren Bereich des Einkaufswagens unterhalb des Niveaus des Bodens des Warenbehälters angeordnet wird. Gerade dies wird jedoch häufig angestrebt, damit die auf der Ablage abzustellenden Gegenstände aus Gründen des Bedienungskomforts und der Kippstabilität des Einkaufswagens möglichst tief liegen.

Ein weiterer Einkaufswagen mit einer Ablage, welche eine Gebrauchslage und eine Nichtgebrauchslage einnehmen kann, ist aus der EP-0 141 398 A2 bekannt. Dabei umfaßt die Ablage ein Schwenkteil und ein Halteteil. Das Schwenkteil ist auf einer am Fahrgestell vorgesehenen, quer zur Fahrtrichtung angeordneten waagrechten Achse drehbar gelagert; seine Position in der Gebrauchslage der Ablage wird durch das Halteteil gesichert. Derartige Einkaufswagen sind zwar unter statischen Gesichtspunkten zufriedenstellend. Jedoch ist ein automatisches Einschwenken des Schwenkteiles, um die Ablage beim Stapeln mehrerer Einkaufswagen von ihrer Gebrauchslage in ihre Nichtgebrauchslage zu überführen, nur bei bestimmten geometrischen Gestaltungen des Einkaufswagens möglich. Desweiteren können Kollisionen zwischen mehreren Einkaufswagen leicht zu Beschädigungen der Ablagen führen, die deren Funktionsfähigkeit beeinträchtigen. Schließlich muß die Ablage, damit sie bei Beladung mit einem schweren Gegenstand nicht unbeabsichtigt einklappt, relativ weit über die Schwenkachse hinaus nach hinten ragen; dies führt zu einer Behinderung der Bedienperson.

Es sind desweiteren Ablagen an Einkaufswagen bekannt, welche aus ihrer Nichtgebrauchslage durch Verschieben im wesentlichen in Längsrichtung des Wagens in ihre Gebrauchslage gebracht werden können (DE-27 42 958 A1, Fig. 3 und 7; US-A-2 890 058; DE-85 00 639.4 U). Die bei diesen Einkaufswagen vorgesehenen Führungen für die längsverschiebbaren Abstellflächen neigen zum Verklemmen. Darüberhinaus bestehen bei freikragenden Abstellflächen ebenfalls statische Probleme in Folge der hohen Kräfte und Momente. Wird die Abstellfläche hingegen mittels eines Stützbügels aufgehängt (DE-85 00 639.4 U), so behindern die Stützbügel das Beladen der Abstellfläche in ihrer Gebrauchslage von der Seite her.

Der vorliegenden Erfindung liegt die Aufgabe zugrunde, einen gattungsgemäßen Einkaufswagen zu schaffen, welcher eine robuste, gegen Beschädigungen unempfindliche Ablage aufweist, wobei die Ablage leicht handhabbar sein und die Bedienperson des Einkaufswagens möglichst wenig behindern soll. Zudem soll auch die Belastung mit schweren Gegenständen nicht zu einer Beschädigung der schwenkbaren Aufhängung des Schwenkteils führen können.

Gemäß der vorliegenden Erfindung wird diese Aufgabe dadurch gelöst, daß das Stützteil einen Abstellflächenabschnitt aufweist, an dem das Schwenkteil angelenkt ist, wobei in der Gebrauchslage der Ablage der Abstellflächenabschnitt des Schwenkteils denjenigen des Stützteils in derselben Ebene liegend verlängert. Bei dem erfindungsgemäßen Einkaufswagen setzt sich somit die gesamte in der Gebrauchslage der Ablage Zur Verfügung stehende Abstellfläche aus einem dem Schwenkteil zugeordneten Anteil und einem dem Stützteil zugeordneten Anteil zusammen. Die beiden Abstellflächenabschnitte gehen in der Gebrauchslage der Ablage ineinander über. Eine auf der Ablage abgestellte Kiste ruht somit nur zu einem Anteil auf dem Abstellflächenabschnitt des Schwenkteils; ein beträchtlicher Anteil der Last der Kiste wird vielmehr unmittelbar von dem Stützteil aufgenommen. Die gelenkige Anlenkung des Schwenkteils wird somit wesentlich entlastet, wodurch die Gefahr einer Beschädigung und/oder Überlastung beträchtlich reduziert wird. Zudem kann das Schwenkteil relativ kurz ausgebildet werden; auch dies trägt zu einer Verringerung der im Bereich der Anlenkung des Schwenkteils wirkenden Momente bei, und darüber hinaus wird die Verstaubarkeit des Schwenkteils in der Nichtgebrauchslage der Ablage vereinfacht. Die bei dem erfindungsgemäßen Einkaufswagen vorgesehene Ablage ist zudem benutzerfreundlich und einfach zu handhaben, denn sie läßt sich in einer für jedermann sofort ersichtlichen Weise von ihrer Nichtgebrauchslage in ihre Gebrauchslage bringen. Sie läßt sich ferner unabhängig von der Ausgestaltung des Fahrgestells des Einkaufswagens universal anwenden. Ein weiterer Vorteil des erfindungsgemäßen Einkaufswagens gegenüber dem aus der EP-0 141 398 A2 bekannten besteht darin, daß die auf der Ablage abgestellten Gegenstände die Handhabung des Einkaufswagens weniger behindern; denn während bei dem bekannten Einkaufswagen auf der Ablage abgestellte Gegenstände relativ weit nach hinten über die am Fahrgestell vorgesehe Schwenkachse des Schwenkteils überstehen müssen, da anderenfalls die Stabilität der Ablage gefährdet wäre, kann beim erfindungsgemäßen Einkaufswagen die Ablage so weit nach vorne versetzt angeordnet werden, daß die auf ihr abgestellten Gegenstände die Handhabung des Einkaufswagens nicht behindern.

Bei einer bevorzugten Weiterbildung des erfindungsgemäßen Einkaufswagens ist vorgesehen, daß das Stützteil abgewinkelt ausgebildet und in der Weise freikragend an einem Querholm des Fahrgestells des Einkaufswagens befestigt ist, daß es sich zwischen dem ihm zugeordneten Abschnitt der Abstellfläche und seinem Befestigungspunkt an dem Querholm des Fahrgestells im wesentlichen vertikal nach unten erstreckt. Alternativ zu der Befestigung am Fahrgestell kann das Stützteil am Boden des Warenbehälters aufgehängt sein, insbesondere an einer den Behälterboden aussteifenden Ouerstrebe. Bei einer derartigen Ausbildung des Stützteils wird nicht nur erreicht, daß die Abstellfläche sich in einer niedrigen, die Schwerpunktlage des beladenen Einkaufswagens günstig beeinflussenden Position befindet. Auch kann die Abstellfläche einer hinten am Einkaufswagen vorgesehenen Ablage infolge ihrer entsprechend tiefen Anordnung weiter nach vorne verlegt werden; denn die Rückwand des Warenbehälters des Einkaufswagens verläuft im allgemeinen schräg, so daß hinter der Ebene der Rückwand des Warenbehälters angeordnete Kisten umso weiter nach vorne kommen, je tiefer die Abstellfläche angeordnet ist. Durch die Verringerung der Behinderungsmöglichkeiten durch eine auf der Ablage abgestellte Kiste wird die Handhabbarkeit des Einkaufswagens weiter erhöht. Dies gilt insbesondere für Ablagen, deren Abstellfläche leicht nach hinten geneigt ist.

Bevorzugt weist das Schwenkteil in seinem als Anschlag dienenden Bereich eine Querstange auf, welche auf einem höheren Niveau liegt als die Schwenkachse. Diese Merkmal trägt dazu bei, daß das Schwenkteil beim Stapeln mehrerer Einkaufswagen automatisch aus seiner Gebrauchslage in seine Nichtgebrauchslage geschwenkt wird. Denn durch den jeweils hinteren Einkaufswagen kann das Schwenkteil an der Querstange erfaßt und um seine Schwenkachse schwenkend angehoben und nach vorne, in seine das Stapeln der Einkaufswagen nicht behindernde Stellung geklappt werden. Begünstigt wird dies dadurch, daß auf der Querstange drehbar gelagert ein Griff vorgesehen ist. Dieser rollt an dem an ihm anliegenden Teil des hinteren Einkaufswagens ab, so daß die Gefahr einer Beschädigung sowohl des hinteren Einkaufswagens als auch der Ablage des vorderen Einkaufswagens reduziert wird. Eine an dem Stützteil entfernt von der Schwenkachse vorgesehene Strebe, die sich zumindest von dem Niveau der Querstange des Schwenkteils in der Gebrauchslage der Ablage aufwärts erstreckt, dient bei einer bevorzugten Weiterbildung des erfindungsgemäßen Einkaufswagens dazu, das automatische Verschwenken des Schwenkteils beim Stapeln der Einkaufswagen weiter zu verbessern.

Die tragenden Teile der Ablage können aus Runddraht, Flachmaterial, Profilrohren, Winkelprofilen oder dgl. hergestellt sein; im Falle der Verwendung von Runddraht ist dabei die Ausbildung der tragenden Teile als Doppeldraht möglich, wie in der Figurenbeschreibung anhand einer bevorzugten Ausführungsform der Erfindung erläutert wird.

Im folgenden wird die Erfindung anhand eines in der Zeichnung dargestellten Ausführungsbeispiels näher erläutert. Es zeigt
- Fig. 1: eine perspektivische Ansicht eines erfindungsgemäßen Einkaufswagens schräg von hinten, wobei die Ablage ihre Gebrauchslage einnimmt, und
- Fig. 2: den Einkaufswagen gemäß Fig. 1, wobei die Ablage ihre Nichtgebrauchslage einnimmt.

Der Einkaufswagen umfaßt ein Fahrgestell 1 und einen hierauf aufgesetzten Warenbehälter 2. Sowohl das Fahrgestell als auch der Warenbehälter sind in als solches bekannter Weise ausgebildet. Auf eine nähere Erläuterung wird daher verzichtet.

Mit den beiden Längsholmen 3 des Fahrgestells 1 ist ein Querholm 4 verschweißt, der sich unterhalb des Bodens des Warenbehälters 2 quer zwischen den beiden Längsholmen erstreckt. An dem Querholm 4 ist eine Befestigungsplatte 5 angeschraubt. An der Befestigungsplatte ist das Stützteil 6 der Ablage angeschweißt.

Das Stützteil 6 ist aus Stahldraht hergestellt. Es umfaßt seitlich angeordnete Tragstreben 7, die an der Befestigungsplatte 5 angeschweißt sind und die sich von dieser im wesentlichen vertikal nach unten erstrecken. Bei der Abwinklung 8 gehen die Tragstreben 7 in die Randstreben 9 des Abstellflächenabschnitts 10 des Stützteils über, die sich schräg nach hinten-unten geneigt erstrecken. Die abgewinkelten, die Tragstreben 7 und die Randstreben 9 bildenden Drähte sind aus Gründen der Festigkeit paarweise parallel zueinander, punktweise miteinander verschweißt ausgebildet. Der Aussteifung des Stützteils 6 dienen ein Ouerdraht 11, der sich zwischen den Tragstreben 7 erstreckt, sowie drei Querdrähte 12, die sich zwischen den Randstreben 9 des Abstellflächenabschnitts 10 des Stützteils erstrecken. Der hinterste der drei Querdrähte 12 bildet die Schwenkachse 13 für das weiter unten beschriebene Schwenkteil 14.

Zur Aussteifung des Stützteils 6 sind ferner zwei Stützstreben 15 vorgesehen. Diese sind mit dem mittleren und dem vorderen Querdraht 12 sowie mit dem Querdraht 11 verschweißt. Die Stützstreben 15 erstrecken sich Abschnittsweise in der durch die oberen Randstreben 9 definierten Ebene des Abstellflächenabschnitts 10, so daß sie eine auf der Ablage abgestellte Kiste mittig unterstützen. Im vorderen Bereich verlaufen die Stützstreben 15 schräg nach vorn; sie schließen hier mit den im wesentlichen vertikal verlaufenden Tragstreben 7 einen Winkel ein und stützen sich vor dem Querholm 4 am Fahrgestell ab. Entsprechend der Neigung der Stützstreben gegenüber den Tragstreben ist die Querstange 11 mittig nach vorne ausgekröpft, so daß sie an den Stützstreben 15 anliegt.

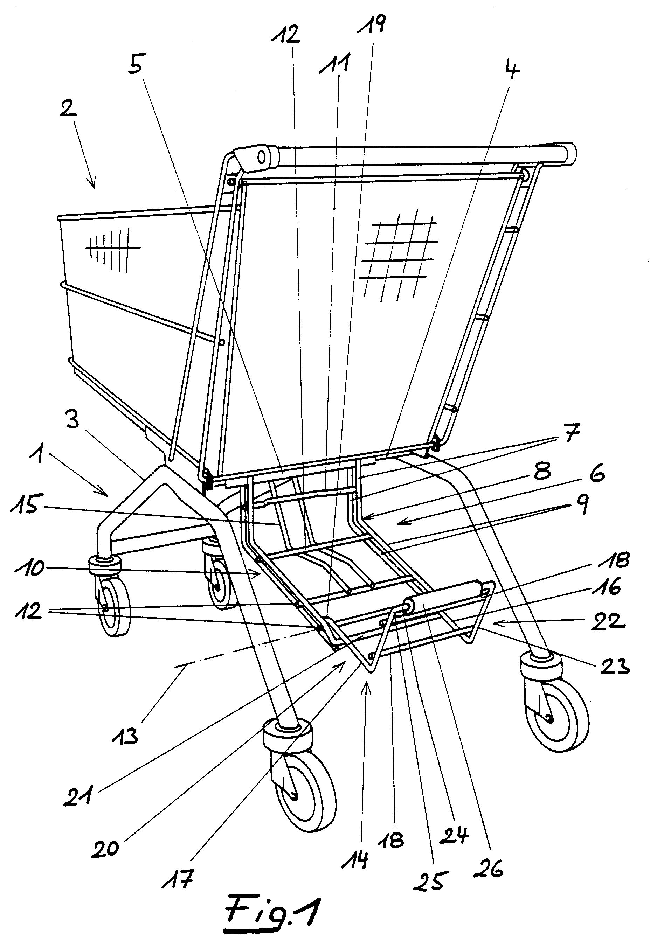

Das Schwenkteil 14 besteht im wesentlichen aus einem vierfach abgewinkelten Rahmendraht 17 und zwei Querdrähten 18. Die beiden Enden des Rahmendrahtes 17 sind zur Bildung je einer Schlaufe 19 umgebogen, wobei die beiden Schlaufen 19 den hinteren Querdraht 12 des Stützteiles zur Bildung einer schwenkbaren Aufhängung der Schwenkteils umgreifen. Die sich an die Schlaufen anschließenden Bereiche 16 des Rahmendrahtes 17 liegen in der Gebrauchslage der Ablage (Fig. 1) auf der Querstrebe 21 auf, welche die Verbindung der beiden oberen Randstreben 9 des Stützteils darstellt. Im Bereich des hinteren Querdrahtes 12 sind die beiden oberen Randstreben 9 in der Weise leicht nach unten abgewinkelt, daß die Querstrebe 21 in der selben Ebene verläuft wie die drei Querdrähte 12. Hierdurch wird erreicht, daß die Bereiche 16 des Rahmendrahtes 17 des Schwenkteils in der selben Ebene verlaufen wie die oberen Randstreben 9 des Stützteils in ihren als Abstellfläche dienenden Bereichen. Der durch die Bereiche 16 des Rahmendrahtes 17 definierte Abstellflächenabschnitt 20 des Schwenkteils 14 stellt somit eine Verlängerung des Abstellflächenabschnitts 10 des Stützteils 6 dar.

An die als Abstellflächenabschnitt 20 dienenden Bereiche 16 des Rahmendrahtes 17 schließen sich dessen als Anschlag 22 dienende Bereiche 23 an. Hierzu ist der Rahmendraht 17 auf beiden Seiten abgewinkelt. Die beiden sich - in der Gebrauchslage der Ablage (Fig. 1) - aufwärts nach oben erstreckenden Bereiche 23 des Rahmendrahtes 17 sind mittels der beiden der Versteifung dienenden Querdrähte 18 miteinander verbunden. Darüberhinaus sind sie mittels der Querstange 24 miteinander verbunden, in welche die beiden Bereiche 23 des Rahmendrahtes an den Abwinklungen 25 übergehen.

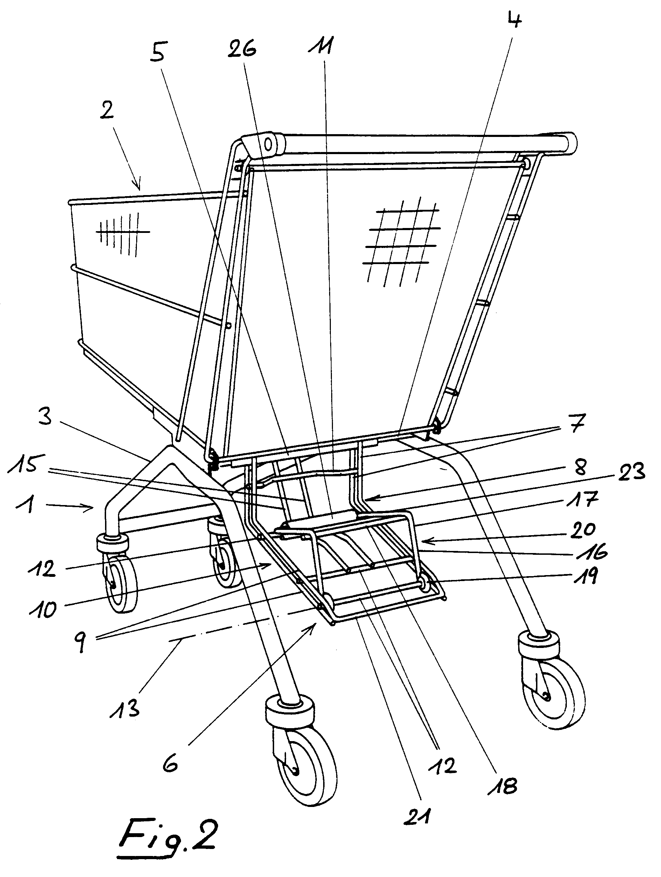

Auf der Querstange 24 ist ein hülsenförmiger Griff 26 drehbar gelagert. Der Griff ist dabei aus zwei miteinander verklebten Halbschalen hergestellt, die auf die Querstange 24 aufgesetzt wurden, nachdem der Randdraht 17 in seine entgültige Gestalt gebogen worden ist. Die Querstange 24 befindet sich auf einem höheren Niveau als der die Schwenkachse 13 für das Schwenkteil 14 definierende Querdraht 12. Hierdurch wird erreicht, daß beim Stapeln zweier Einkaufswagen das Schwenkteil 14 des vorderen Einkaufswagens angehoben und von seiner Gebrauchslage (Fig. 1) in seine Nichtgebrauchslage (Fig. 2) geschwenkt wird, indem die vorderen, aufwärts gerichteten Bereiche der Stützstreben 15 den Griff 26 nach vorne drücken.

## Patentansprüche

1. Einkaufswagen mit einem Fahrgestell (1), einem hieran befestigten Warenbehälter (2) und einer Ablage, insbesondere für Getränkekisten, wobei die Ablage eine Gebrauchslage und eine Nichtgebrauchslage einnehmen kann und ein starres Stützteil (6) sowie ein Schwenkteil (14) umfaßt, welches um eine horizontale querverlaufende Achse (13) schwenkbar an dem Stützteil angelenkt ist und einen Abstellflächenabschnitt (20) und einen entfernt von der Schwenkachse vorgesehenen Anschlag (22) aufweist,
dadurch gekennzeichnet,
daß das Stützteil (6) einen Abstellflächenabschnitt (10) aufweist, an dem das Schwenkteil (14) angelenkt ist, wobei in der Gebrauchslage der Ablage der Abstellflächenabschnitt (20) des Schwenkteils (14) denjenigen des Stützteils (6) in derselben Ebene liegend verlängert.

2. Einkaufswagen nach Anspruch 1,
dadurch gekennzeichnet,
daß das Stützteil (6) abgewinkelt ausgebildet und in der Weise freikragend an einem Querholm (4) des Fahrgestells (1) oder des Warenbehälters befestigt ist, daß es sich benachbart dem Querholm (4) im wesentlichen vertikal nach unten und nach einer Abwinklung (8) zur Bildung des Abstellflächenabschnitts (10) schräg nach hinten geneigt erstreckt.

3. Einkaufswagen nach Anspruch 1,
dadurch gekennzeichnet,
daß das Schwenkteil (14) in seinem als Anschlag (22) dienenden Bereich eine Querstange (24) aufweist, welche auf einem höheren Niveau liegt als die Schwenkachse (13).

4. Einkaufswagen nach Anspruch 3,
dadurch gekennzeichnet,
daß ein auf der Querstange (24) drehbar gelagerter Griff (26) vorgesehen ist.

5. Einkaufswagen nach Anspruch 3,
dadurch gekennzeichnet,
daß das Stützteil (6) mindestens eine Stützstrebe (15) umfaßt, die entfernt von der Schwenkachse (13) einen aufwärts gerichteten, zur Anlage an der Querstange (24) eines weiteren Einkaufswagens, dessen Ablage sich in der Gebrauchslage befindet, bestimmten Bereich aufweist.

## Claims

1. Shopping trolley with a chassis (1), a goods container (2) attached thereto and a shelf, in particular for cartons of drinks, the shelf being able to adopt a position of use and a position of non-use and comprising a rigid support part (6) as well as a tilting part (14), which is connected to the support part in a manner able to tilt about a horizontal, transversely extending axis (13) and comprises a storage surface section (20) and a stop (22) provided at a distance from the pivot axis,
characterised in that the support part (6) comprises a storage surface section (10), to which the tilting part (14) is connected, in which case in the position of use of the shelf, the storage surface section (20) of the tilting part (14) extends that of the support part (6), lying in the same plane.

2. Shopping trolley according to Claim 1, characterised in that the support part (6) has an angular construction and is attached in a cantilevered manner to a transverse member (4) of the chassis (1) or the goods container so that adjacent to the transverse member (4) it extends essentially vertically downwards and after a bend (8) to form the storage surface section (10), extends inclined obliquely rearwards.

3. Shopping trolley according to Claim 1, characterised in that in its region serving as a stop (22), the tilting part (14) comprises a transverse rod (24), which lies at a higher level than the pivot axis (13).

4. Shopping trolley according to Claim 3, characterised in that a handle (26) mounted to rotate on the transverse rod (24) is provided.

5. Shopping trolley according to Claim 3, characterised in that the support part (6) comprises at least one support strut (15), which remote from the pivot axis (13) comprises an upwardly directed region intended for abutment against the transverse rod (24) of another shopping trolley, whereof the shelf is located in the position of use.

## Revendications

1. Chariot pour achats comportant un châssis (1), un récipient (2) pour marchandises fixé au châssis, et un dispositif de support, notamment pour des packs de boissons, le dispositif de support pouvant prendre une position d'utilisation et une position de non-utilisation et comprenant un élément de support rigide (6) ainsi qu'une partie basculante (14), qui est articulée sur l'élément de support, de manière à pouvoir basculer autour d'un axe horizontal transversal (13), et un élément de surface de rangement (20) et une butée (22) prévue dans une position éloignée de l'axe de basculement, caractérisé en ce
que l'élément de support (6) possède un élément de surface de rangement (10) sur lequel la partie basculante (14) est articulée, auquel cas lorsque le dispositif de rangement est dans la position d'utilisation, l'élément de surface de rangement (20) de la partie basculante (14) prolonge l'élément de surface de rangement de l'élément de support (6), dans une position située dans le même plan.

2. Chariot pour achats selon la revendication 1, caractérisé en ce que l'élément de support (6) est agencé avec une forme coudée et est fixé en porte-à-faux sur une traverse (4) du châssis (1) ou du récipient à marchandises, et s'étend essentiellement verticalement vers le bas au voisinage de la traverse (4) et, au-delà d'une partie coudée (8), s'étend obliquement en position inclinée vers l'arrière, pour former l'élément de surface de rangement (10).

3. Chariot pour achats selon la revendication 1, caractérisé en ce que la partie basculante (14) possède, dans sa zone utilisée comme butée (22), une barre transversale (24), qui est située à un niveau supérieur à celui de l'axe de basculement (13).

4. Chariot pour achats selon la revendication 3, caractérisé en ce qu'il est prévu une poignée (26) montée de manière à pouvoir tourner sur la barre transversale (24).

5. Chariot pour achats selon la revendication 3, caractérisé en ce que l'élément de support (6) comprend au moins une entretoise de support (15), qui possède, dans une position éloignée par rapport à l'axe de basculement (13), une partie dirigée vers le haut et sur laquelle est destinée à venir s'appliquer la barre transversale (24) d'un autre chariot pour achats, dont le dispositif de support est situé dans la position d'utilisation.
